# EUROPÄISCHE PATENTSCHRIFT

(11) **EP 1 589 545 B1**
(45) Veröffentlichungstag und Bekanntmachung des Hinweises auf die Patenterteilung: **14.05.2014**
(21) Anmeldenummer: 05007532.4
(22) Anmeldetag: 06.04.2005
(51) Int. Cl.: H01F 7/16, F16K 31/08, F01L 9/04

(54) **Magnetantrieb für ein Ventil**
Magnetic actuator for a valve
Actuateur magnétique pour une soupape

(30) Priorität: 19.04.2004 DE 202004006156 U
(43) Veröffentlichungstag der Anmeldung: 26.10.2005
(73) Patentinhaber: Bürkert Werke GmbH, 74653 Ingelfingen (DE)
(72) Erfinder: Scheibe, Ralf, 74653 Künzelsau-Garnberg (DE)
(74) Vertreter: Prinz & Partner

(56) Entgegenhaltungen:
- DE-A1- 10 044 486
- DE-A1- 10 207 828
- DE-A1- 19 722 013
- DE-C1- 19 503 469
- US-A- 4 071 042

## Beschreibung

Die Erfindung betrifft einen Magnetantrieb für ein Ventil, insbesondere für ein pneumatisches oder hydraulisches Ventil, mit einem beweglichen Anker und einem Permanentmagneten.

Aus der DE 102 07 828 A1 ist ein solcher Magnetantrieb bekannt, wobei der Anker polarisiert ist. Der Anker umfaßt einen zwischen zwei den magnetischen Fluß leitenden Ringen angeordneten Permanentmagneten in Form eines Ringmagneten, der senkrecht zur Bewegungsrichtung des Ankers polarisiert ist.

In der DE 197 22 013 C2 ist ein magneto-mechanisches Kraftsystem gezeigt, bei dem eine auf einem Elektromagneten aufliegende Polplatte durch Bestromung des Elektromagneten angehoben wird. Dabei wird der Magnetfluß teilweise in einen Nebenschluß-Luftspalt verdrängt, der zwischen einem Hals einer Flußleitplatte und der Wandung eines Weicheisentopfes des Elektromagneten gebildet ist.

In der DE 100 44 486 A1 ist ein Hydraulikventil mit den Merkmalen des Oberbegriffs des Anspruchs 1 gezeigt. Das Hydraulikventil umfasst einen Elektromagneten, der eine umpolbare Magnetspule und einen dazu in Reihe geschalteten Dauermagneten aufweist, die mit einem Anker zusammenwirken.

Aus der DE 195 03 469 C1 ist eine Dichtungsanordnung mit einem Dichtring bekannt, der ein Hilfsmittel aufweist, das aus einem magnetisierbaren Werkstoff als filmartige dünne Zwischenschicht ausgebildet ist. Das Hilfsmittel wirkt mit einem Drehzahlsensor zusammen.

Die US 4,071,042 A beschreibt einen elektromagnetischen Aktor für ein hydraulisches Ventil mit einem Permanentmagneten zwischen zwei Polstücken, der an der beweglichen Armatur angeordnet ist.

Aufgabe der Erfindung ist es, einen kompakten Magnetantrieb für ein Ventil mit minimierter Schalt- bzw. Dauerleistung zu schaffen.

Zur Lösung dieser Aufgabe wird ein Magnetantrieb mit den Merkmalen der Anspruchs 1 vorgeschlagen. Die Erfindung beruht auf der Erkenntnis, daß magnetische Pasten- bzw. Folienzuschnitte herstellbar sind, mit denen spezifisch geformte Permanentmagnete realisierbar sind, wobei gegebenenfalls auch sehr komplizierte Ausformungen möglich sind. Somit kann der Permanentmagnet für die jeweilige Anforderung, insbesondere im Hinblick auf dessen Raumform, "maßgeschneidert" werden.

Der aus der magnetischen Paste oder Folie gebildete Permanentmagnet kann allgemein einen Teil des Magnetantriebs darstellen. Erfindungsgemäß ist der Permanentmagnet in den beweglichen Anker integriert und wirkt mit einem feststehenden Elektromagneten zusammen.

Gemäß einer bevorzugten Ausgestaltung ist der Anker in einer Axialrichtung beweglich und umfaßt wenigstens ein erstes und ein zweites Teil, wobei der Permanentmagnet bezüglich der Axialrichtung zwischen den beiden Teilen angeordnet ist. Die beiden Teile sind vorzugsweise plattenförmig aufgebaut, wobei das zweite Teil dem Elektromagneten direkt gegenüberliegt und das erste Teil einen sich in der Axialrichtung zum Elektromagneten hin erstreckenden Fortsatz aufweist. Bei der bevorzugten Ausführungsform ist ferner zwischen dem Fortsatz des ersten Teils und dem zweiten Teil ein radialer Nebenspalt gebildet, in dem ein magnetisch nicht-leitendes Material angeordnet sein kann. Bei geeigneter Auslegung des Materials und der Geometrie der Komponenten des Elektromagneten und des Ankers, auch bezüglich der umgebenden Teile (z.B. im Hinblick auf eine translatorische oder eine rotatorische Antriebsbewegung des Ankers), kann eine Vielzahl von Ventilfunktionen realisiert werden.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 den prinzipiellen Aufbau eines erfindungsgemäßen Magnetantriebs in Schnittansicht;
- Figur 2 die Magnetflußlinien bei einem erfindungsgemäßen Magnetantrieb bei nicht-aufliegendem Anker und positiv bestromtem Elektromagneten;
- Figur 3 die Magnetflußlinien bei aufliegendem Anker und nicht bestromtem Elektromagneten;
- Figur 4 die Magnetflußlinien bei aufliegendem Anker und negativ bestromtem Elektromagneten;
- Figuren 5a bis 5d schematisch dargestellte Varianten des erfindungsgemäßen Magnetantriebs; und
- Figur 6 ein Ventil mit einem erfindungsgemäßen Magnetantrieb in Schnittansicht.

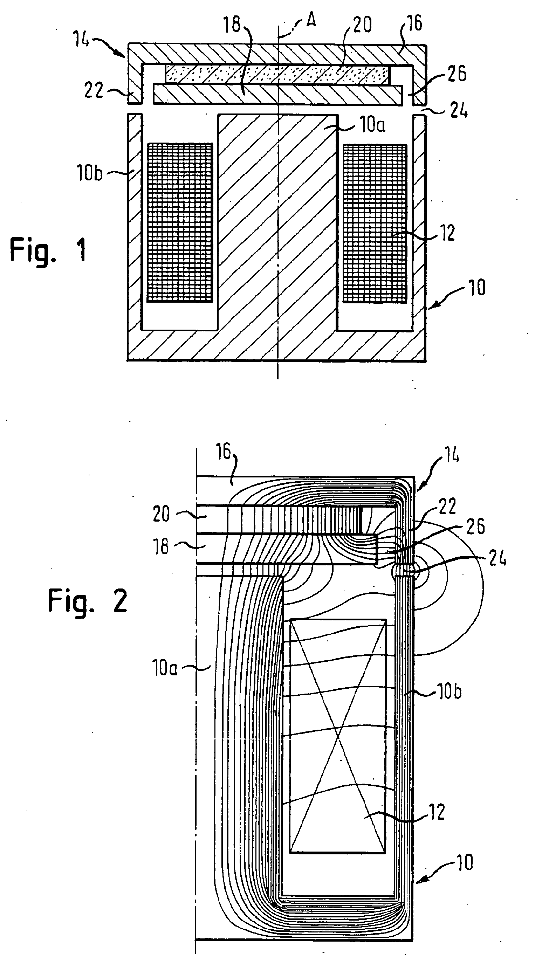

Aus Figur 1 geht der prinzipielle Aufbau eines erfindungsgemäßen Magnetantriebs für ein Ventil hervor. Ein Topf 10 mit einer konzentrisch um eine Mittelachse A des Topfes 10 gewickelten Spule 12 bildet in bekannter Weise einen Elektromagneten. Der Topf 10 hat einen E-förmigen Querschnitt mit einem Mittelteil 10a und einer Wandung 10b. Dem Elektromagneten gegenüberliegend ist ein in Richtung der Achse A beweglicher Anker 14 angeordnet. Der Anker 14 umfaßt ein erstes Teil 16 und ein dem Elektromagneten direkt gegenüberliegendes zweites Teil 18, die beide im wesentlichen plattenförmig sind und sich senkrecht zur Achse A erstrecken.

Zwischen den beiden Teilen 16 und 18 ist ein Permanentmagnet 20 angeordnet. Das erste Teil 16 weist randseitig einen zum Elektromagneten hin gerichteten Fortsatz 22 auf, der dem Elektromagneten gegenüberliegt. Der Spalt zwischen dem zweiten Bauteil 18 bzw. dem Fortsatz 22 und dem Elektromagneten wird als Arbeitsluftspalt 24 bezeichnet. Zwischen dem Fortsatz 22 und dem zweiten Teil 18 ist ein radialer Spalt vorgesehen, der als Nebenspalt 26 bezeichnet wird. Im Nebenspalt 26 kann ein magnetisch nicht-leitendes Material, z.B. ein Kunststoffring (nicht gezeigt) angeordnet sein. Der Anker 14 kann an ein Federelement (in Figur 1 nicht gezeigt) gekoppelt sein, das eine vom Elektromagneten weg gerichtete Vorspannkraft auf den Anker 14 ausübt.

Der Permanentmagnet 20 ist aus einer magnetischen Paste auf Basis eines NdFeB-Pulvers gebildet, mit der sich sehr spezielle Magnetformen realisieren lassen. Alternativ kann der Permanentmagnet 20 auch aus speziell zugeschnittenen magnetischen Folien (foliengegossene Schichten) gebildet sein, die ebenfalls auf Basis eines NdFeB-Pulvers hergestellt sind. Der Permanentmagnet 20 ist in Axialrichtung polarisiert.

Figur 2 zeigt den Verlauf der Magnetflußlinien bei einem erfindungsgemäßen Magnetantrieb bei nicht-aufliegendem Anker 14 und "positiv" bestromtem Elektromagneten, d.h. das von der Spule 12 induzierte Magnetfeld des Elektromagneten addiert sich zu dem des Permanentmagneten 20. Somit ergibt sich einerseits ein Fluß vom Mittelteil 10a des Topfes 10 über den Arbeitsluftspalt 24 durch das zweite Teil 18 in den Permanentmagneten 20 und andererseits vom Permanentmagneten 20 durch das zweite Teil 18 über den Nebenspalt 26 in den Fortsatz 22 des ersten Teils 16 und wiederum über den Arbeitsluftspalt 24 in die Wandung 10b des Topfes 10. Das erste Teil 16 sorgt für einen "Rückschluß" der in Axialrichtung in den Permanentmagneten 20 eintretenden und aus dem Permanentmagneten 20 austretenden Flußlinien. Aus diesem Flußverlauf resultiert eine anziehende Kraft des Elektromagneten auf den Anker 14, die gegebenenfalls größer als die Vorspannkraft des Federelements ist, so daß sich der Anker 14 auf den Elektromagneten zu bewegt (Hub), bis er auf dem Elektromagneten aufliegt.

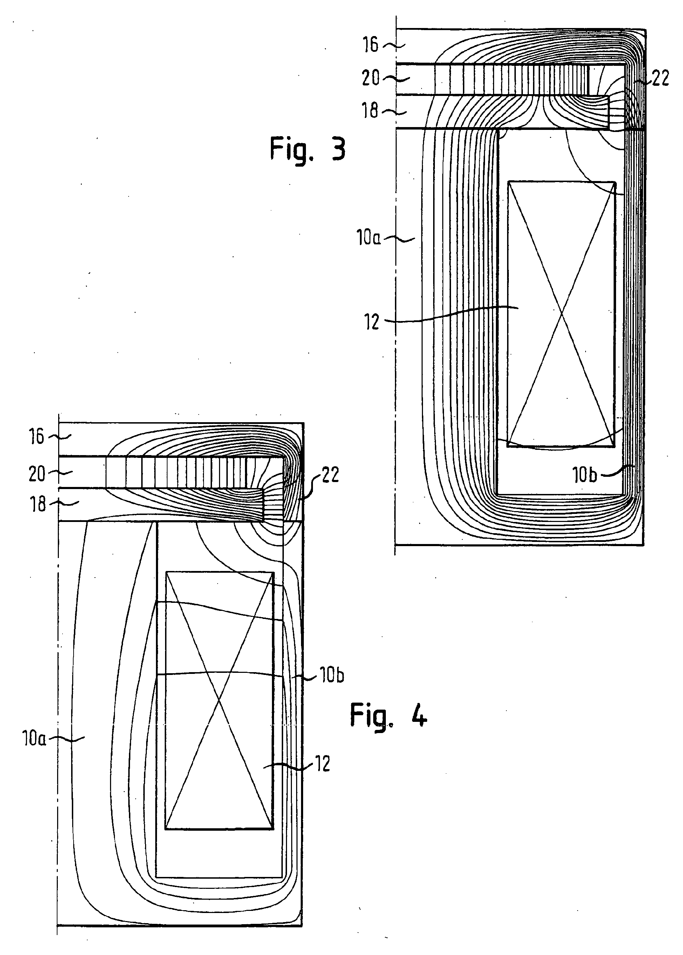

Dieser Zustand ist in Figur 3 bei nicht-bestromtem Elektromagneten dargestellt. Der Arbeitsluftspalt 24 ist geschlossen, so daß die Magnetflußlinien direkt vom Mittelteil 10a des Topfes 10 in das zweite Teil 18 bzw. vom Fortsatz 22 des ersten Teils 16 in die Wandung 10b des Topfes 10 übertreten.

Um den Anker 14 vom Elektromagneten wieder weg zu bewegen (Rückstellen), wird der Elektromagnet "negativ" bestromt, d.h. das von der Spule 12 induzierte Magnetfeld des Elektromagneten ist dem des Permanentmagneten 20 entgegengerichtet, so daß eine abstoßende Kraft auf den Anker 14 ausgeübt wird. Der entsprechende Verlauf der Magnetflußlinien ist in Figur 4 gezeigt. Der Nebenspalt 26 ermöglicht wiederum den Übertritt der Flußlinien vom zweiten Teil 18 zum Fortsatz 22 des ersten Teils 16, in diesem Fall zur Bildung eines geschlossenen Magnetkreises des Permanentmagneten 20.

Ein im Nebenspalt 26 angeordnetes Material gewährleistet, daß die Abmessungen des Nebenspalts 26 konstant bleiben.

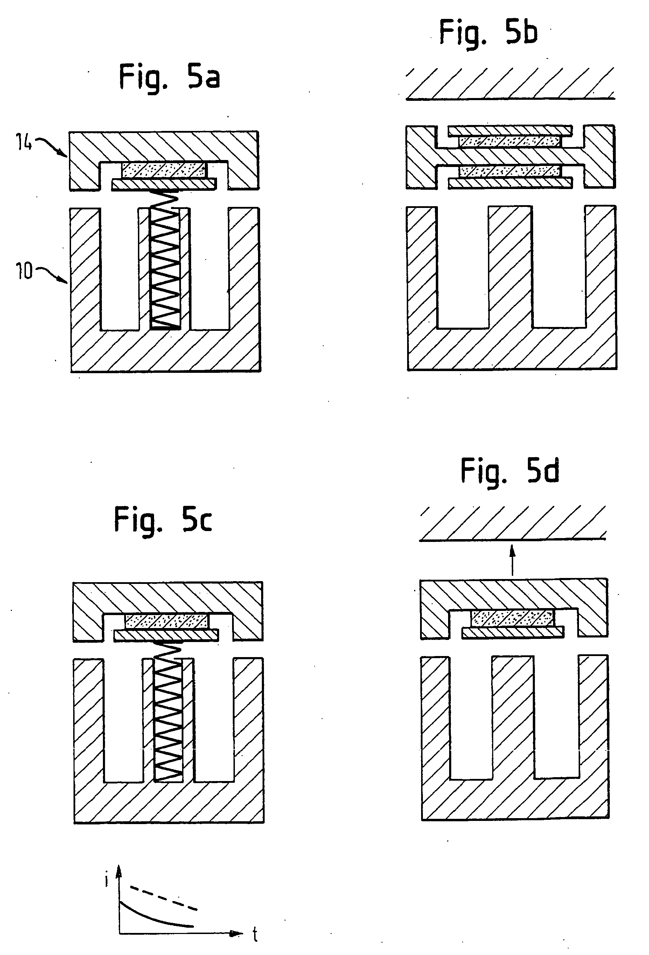

In den Figuren 5a bis 5d sind schematisch vier verschiedene Varianten eines erfindungsgemäßen Magnetantriebs dargestellt, die anhand der folgenden Tabelle charakterisiert sind:

| | Federelement | bistabil/monostabil | Schaltstrom |
|---|---|---|---|
| Variante 1 (Fig.5a) | + | b | i+; i- |
| Variante 2 (Fig.5b) | - | b | i+; i- |
| Variante 3 (Fig.5c) | + | m | i+; i+H |
| Variante 4 (Fig.5d) | - | m | i+ |

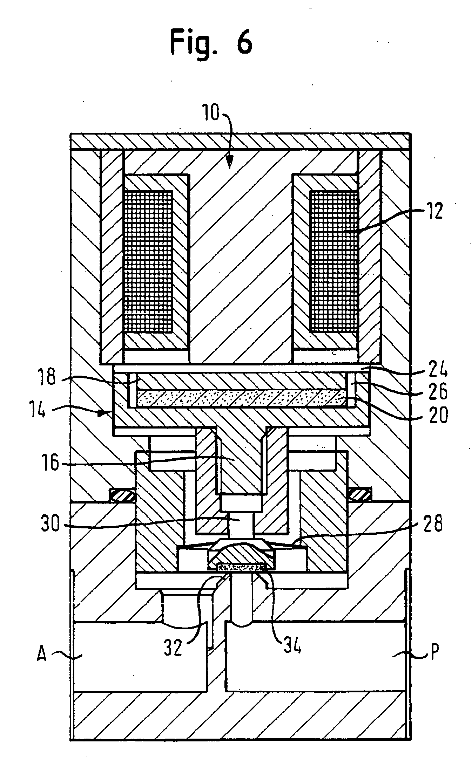

Figur 6 zeigt eine Anwendung des erfindungsgemäßen Magnetantriebs in einem Fluidventil. Ein mittels eines Federelements 28 (hier eine Formfeder) vorgespannter Ventilkörper 30 verschließt einen zwischen einem Druckanschluß P und einem Arbeitsanschluß A gebildeten Ventilsitz 32 mit einer Dichtung 34. Der Ventilkörper 30 ist an den Anker 14 des Magnetantriebs gekoppelt, der bei positiver Bestromung des Elektromagneten den Anker 14 anhebt, so daß der Ventilsitz 32 freigegeben wird. Die Rückstellung erfolgt entweder alleine durch die Kraft des Federelements 28 oder unterstützt durch eine negative Bestromung des Elektromagneten.

## Patentansprüche

1. Magnetantrieb für ein Ventil, insbesondere für ein pneumatisches oder hydraulisches Ventil, mit einem beweglichen Anker (14) und einem Permanentmagneten (20), der aus einer magnetischen Paste oder einer magnetischen Folie gebildet ist, **dadurch gekennzeichnet, dass** der Permanentmagnet (20) in den beweglichen Anker (14) integriert ist, und mit einem feststehenden Elektromagneten zusammenwirkt.

2. Magnetantrieb nach Anspruch 1, **dadurch gekennzeichnet, dass** der Anker (14) in einer Axialrichtung beweglich ist und wenigstens ein erstes und ein zweites Teil (16, 18) umfasst, wobei der Permanentmagnet (20) bezüglich der Axialrichtung zwischen den beiden Teilen (16, 18) angeordnet ist.

3. Magnetantrieb nach Anspruch 2, **dadurch gekennzeichnet, dass** die beiden Teile (16, 18) plattenförmig aufgebaut sind, wobei das zweite Teil (18) dem Elektromagneten direkt gegenüberliegt und das erste Teil (16) einen sich in der Axialrichtung zum Elektromagneten hin erstreckenden Fortsatz (22) aufweist.

4. Magnetantrieb nach Anspruch 3, **dadurch gekennzeichnet, dass** zwischen dem Fortsatz (22) des ersten Teils (16) und dem zweiten Teil (18) bezüglich der Axialrichtung ein radialer Nebenspalt (24) gebildet ist.

5. Magnetantrieb nach Anspruch 4, **dadurch gekennzeichnet, dass** im Nebenspalt (26) ein magnetisch nicht leitendes Material angeordnet ist.

6. Magnetantrieb nach einem der vorhergehenden Ansprüche, **dadurch gekennzeichnet, dass** der Permanentmagnet (20) auf der Basis eines NdFeB-Pulvers hergestellt ist.

7. Ventil mit einem Magnetantrieb nach einem der vorhergehenden Ansprüche, **dadurch gekennzeichnet, dass** der Anker (14) mittels eines Federelements (28) in eine vom Elektromagneten weg weisende Richtung vorgespannt ist.

## Claims

1. A magnetic drive for a valve, in particular for a pneumatic or hydraulic valve, comprising a movable armature (14) and a permanent magnet (20) which is formed from a magnetic paste or a magnetic foil, **characterized in that** the permanent magnet (20) is integrated in the movable armature (14) and cooperates with a fixed solenoid.

2. The magnetic drive according to claim 1, **characterized in that** the armature (14) is movable in an axial direction and comprises at least a first and a second part (16, 18), the permanent magnet (20) being arranged between the two parts (16, 18) with respect to the axial direction.

3. The magnetic drive according to claim 2, **characterized in that** the two parts (16, 18) are constructed in a plate shape, the second part (18) lying directly opposite the solenoid, and the first part (16) having an extension (22) extending in the axial direction towards the solenoid.

4. The magnetic drive according to claim 3, **characterized in that** a radial secondary gap (24) is formed between the extension (22) of the first part (16) and the second part (18) with respect to the axial direction.

5. The magnetic drive according to claim 4, **characterized in that** a magnetically non-conducting material is arranged in the secondary gap (26).

6. The magnetic drive according to any of the preceding claims, **characterized in that** the permanent magnet (20) is produced on the basis of a NdFeB powder.

7. A valve comprising a magnetic drive according to any of the preceding claims, **characterized in that** the armature (14) is pretensioned by means of a spring element (28) in a direction pointing away from the solenoid.

## Revendications

1. Entraînement magnétique pour valve, en particulier pour une valve pneumatique ou hydraulique, comportant une armature mobile (14) et un aimant permanent (20) réalisé à partir d'une pâte magnétique ou d'une feuille magnétique, **caractérisé en ce que** l'aimant permanent (20) est intégré dans l'armature mobile (14) et coopère avec un électroaimant fixe.

2. Entraînement magnétique selon la revendication 1, **caractérisé en ce que** l'armature (14) est mobile dans un sens axial et comprend au moins une première et une deuxième pièce (16, 18), l'aimant permanent (20) étant agencé entre les deux pièces (16, 18) par rapport au sens axial.

3. Entraînement magnétique selon la revendication 2, **caractérisé en ce que** les deux pièces (16, 18) présentent une structure en forme de plaque, la deuxième pièce (18) étant directement opposée à l'électroaimant, et la première pièce (16) présentant un prolongement (22) qui s'étend dans le sens axial en direction de l'électroaimant.

4. Entraînement magnétique selon la revendication 3, **caractérisé en ce qu'**une fente secondaire radiale (24) est réalisée entre le prolongement (22) de la première pièce (16) et la deuxième pièce (18) par rapport au sens axial.

5. Entraînement magnétique selon la revendication 4, **caractérisé en ce qu'**un matériau magnétiquement non conducteur est agencé dans la fente secondaire (26).

6. Entraînement magnétique selon l'une des revendications précédentes, **caractérisé en ce que** l'aimant permanent (20) est réalisé à base d'une poudre de NdFeB.

7. Valve présentant un entraînement magnétique selon l'une des revendications précédentes, **caractérisé en ce que** l'armature (14) est précontrainte dans un sens dirigé en éloignement de l'électroaimant au moyen d'un élément ressort (28).
